# EUROPEAN PATENT SPECIFICATION

(11) **EP 2 924 415 B1**
(45) Date of publication and mention of the grant of the patent: **03.11.2021**
(21) Application number: 15161279.3
(22) Date of filing: 27.03.2015
(51) Int. Cl.: G01N 1/22

(54) **Remotely activated sampling equipment of odour emissions**
Fernaktivierte Vorrichtung zur Entnahme von Geruchsemissionsproben
Dispositif d'échantillonnage activé à distance des émissions d'odeurs

(30) Priority: 27.03.2014 IT BO20140170
(43) Date of publication of application: 30.09.2015
(73) Proprietor: Lab Service Analytica S.r.l., 40011 Anzola dell'Emilia (IT)
(72) Inventor: Fornaro, Antonio, 74020 Faggiano (IT); Ravaglia, Valerio, 40010 Sala Bolognese (IT); Gianelli, Michele, 40054 Budrio (IT); Valtancoli, Enrico, 40064 Ozzano dell' Emilia (IT)
(74) Representative: Boggio, Luigi

(56) References cited:
- US-A- 6 125 710
- US-A1- 2006 000 298
- SIRONI ET AL: "Development of a system for the continuous monitoring of odours from a composting plant: Focus on training, data processing and results validation methods", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 124, no. 2, 7 June 2007 (2007-06-07), pages 336-346, XP022107817, ISSN: 0925-4005, DOI: 10.1016/J.SNB.2006.12.037
- None

## Description

The present invention concerns a remotely activated sampling equipment of odour emissions.

As already known, the UNI EN 13725 norm specifies a method for the objective determination of the odour concentration from a gaseous sample by using dynamic olfactometry.

The dynamic olfactometry involves the use of a panel of human beings as evaluators of an odour emission coming from point or surface sources.

The main aim of the rules is to provide a common basis for the evaluation of the odour emissions in all EU countries.

The measurement of an odour with a time delay between sampling and measurement is called "delayed olfactometry".

As already known, in the delayed olfactometry sampling the sample is collected where the odour is generated, and then said sample is transferred in a container to be analyzed by a panel of examiners.

This delayed olfactometry sampling technique must be applied if the standard characteristics of the olfactory room cannot be maintained on the site; or when sources are involved wherein the odour concentration can vary over time, as it is generally the case.

The delayed olfactometry sampling can be applied to all odour sources, if these sources are widespread, and when such odours can be conveyed for sampling.

However, the current way delayed sampling is carried out has some drawbacks, since experience shows that the odour very often presents itself as a limited temporal phenomenon, characterized by an extreme variability in time and space.

Generally speaking, the time lapse between the reporting and the intervention on site of an operator carrying out the sampling according to the specifications, can lead (together with particular meteorological phenomena) to a complete dispersion of the odour trail.

Therefore, the delayed sampling may not be truly representative of the situation perceived by the population at a given critical time, as these samples almost never can be taken exactly when the discomfort is perceived by the population.

United States Patent No. 6,125,710 discloses an air measurement system that includes a sensor unit capable to measure the quality of an air sample taken by a plurality of air intake valves in communication with an air inlet port of the sensor unit.

United States Patent Application No. US 2006/0000298 A1 discloses a gas sample and conditioning device for sampling natural gas in a storage or transport device and for conditioning the gas to avoid dew point drop out of the natural gas when it reaches a gas analyser.

The paper of Sironi, Capelli, Céntola and Del Rosso, titled "Development of a system for the continuous monitoring of odours from a composting plant: Focus on training, data processing and result validation method", published by Elsevier in 2006, discloses an experimental monitoring of environmental odours conducted at a composting plant by using an electronic nose and it focuses on the training procedures of the electronic nose.

The main object of the present invention is to provide an equipment for sampling odour emissions which is free from the aforesaid drawbacks and, at the same time, is simple and inexpensive to manufacture.

Incidentally, the sampling equipment of odour emissions according to the present invention has also been manufactured in accordance with the UNI EN 13725 norms.

This equipment allows the sampling of odour emissions in inert bags by means of a remote control (for example: SMS, remote controls, sensors, etc.).

Additionally, the equipment is provided with a system thermoregulating the sampling chamber between 20°C and 25°C (set by the user) to allow the correct storage of the containers at the ideal temperature for the sampling and for the samples (as stated by the UNI EN 13725 norm).

Moreover, in the equipment according to the present invention it is possible to set different temperatures so as to maintain the temperature of the samples above the dew point in order to avoid condensation.

The containers for sampling, storing and transporting samples are rigid and made of an opaque (dark) material, so as to facilitate the transport and avoid the exposure of the samples to direct sunlight, in order to minimize any photochemical reactions of the content of the samples.

In the case of olfactory harassment, this equipment allows the timely and unattended sampling of odour emissions by remote activation (SMS, Internet or other).

The system can be activated by a single user, by a computer system, or by a possible control agency, which can carry out the sampling even in the absence of personnel.

Therefore, according to the present invention, it is provided an equipment for sampling odour emissions, according to what claimed in Claim 1 or in any one of the Claims directly or indirectly depending on Claim 1.

For a better understanding of the present invention, a preferred embodiment will be now described with the aid of a figure, given purely by way of non-limiting example.

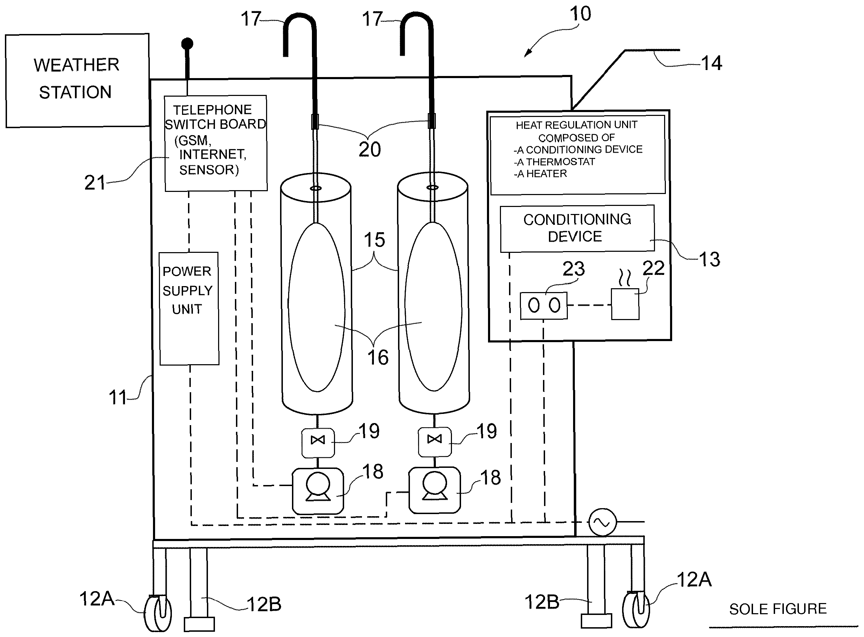

In the enclosed figure 10 indicates, as a whole, an equipment for sampling odour emissions according to the teaching of the present invention.

The equipment 10 includes a casing 11 (having a substantially rectangular parallelepiped shape) mounted on a plurality of wheels 12A and of adjustable feet 12B resting on the ground.

The casing 11 is thermo-isolated and thermo-controlled by means of a temperature control system formed by an air conditioning device 13, a thermostat 23 which controls the operation of a heater 22 inside the casing 11. This thermoregulation system has the function of maintaining a constant temperature inside the casing 11.

The air conditioning system has a side exhaust port 14. This side exhaust port 14 prevents the exhaust conditioned air from interfering with the intake of the ambient air to be sampled (see below).

The conditioning device 13 can maintain inside the casing 11 a temperature which has been previously set by the user, even in case of an ambient temperatures above 25°C. The heater 22, however, prevents the temperature of the air inside the casing 11 from dropping below the temperature preset by the user if the ambient temperature reaches values close to zero. This condition, mentioned in the rules, allows a correct sampling without condensation and without degradation of the sample.

The casing 11 houses two rigid sampling containers 15 made of an opaque material (e.g. PCV). The sampling containers 15 are sealed against the outside.

In each sampling container 15 there is a respective sampling bag 16 made of an inert material (Nalophan or something else).

Each sampling bag 16 is connected to the external environment by means of a respective tube 17. This tube is preferably curved to prevent the rain from entering the sampling bag 16.

Furthermore, each rigid sampling container 15 is provided with a respective vacuum pump 18 provided in turn with a respective micrometric valve 19 regulating the flow rate, by means of which the user can set the operation flow of the outside air. Advantageously, but not necessarily, the sampling vacuum pumps 18 are independent and adjustable to different flow rates in order to perform two or more simultaneous or not simultaneous samplings at different flow rates, thus obtaining the best representation of the odour emissions.

Moreover, on each curved tube 17 it is arranged a respective non-return valve 20 to preserve the sample at the end of the sampling phase.

The equipment 10 object of the present invention is, in addition, provided with the following devices:
- a telephone switchboard 21 housing a SIM card for managing the remote sampling events via SMS or phone call; the telephone switchboard 21 is also able to house a SIM card for sending messages of successful sampling start and successful sampling end;
- a weather station for recording the parameters of temperature and humidity inside the casing 11, outside temperature, wind speed and direction and other possible parameters.

The sampling equipment 10 of odour emissions object of the present invention operates as follows:
- the two vacuum pumps 18 are operated to start the air sampling;
- the air in the sampling containers 15 is then ejected, and the sample bags 16 expand by sucking outside air through the curved tubes 17;
- the air containing the odour emissions is thus trapped in the sample bags 16 and cannot be expelled in the environment due to the presence of the non-return valve 20 which prevents the air from escaping;
- once the sample bags 16 have been filled with the air containing odour emissions, the sampling containers 15 are removed from the equipment 10 and taken to the laboratory where the panel of responsible persons will carry out the requested olfactory analysis.

The main advantages of the sampling equipment object of the invention can be so summarized:
- timely and unattended sampling of odour emissions by means of a remote control (SMS, Internet or other); and
- system activation by a single user, by a computer system or by a possible control agency, which can carry out the sampling even in the absence of personnel.

## Claims

1. Sampling equipment (10) of odour emissions, comprising:
- pickup and storage means (15, 16, 17, 18, 19, 20) of air samples containing the odour emissions; and
- remote activation means (21) and/or sensors for the activation of said pickup and storage means (15, 16, 17, 18, 19, 20);
and being **characterized in that** it further comprises a casing (11), which is thermoregulated by means of a conditioning device (13) and a thermostat (23) provided with a heater (22) and houses at least a portion of said pickup and storage means (15, 16, 17, 18, 19, 20).

2. Sampling equipment (10), according to Claim 1, **characterized in that** said pickup and storage means (15, 16, 17, 18, 19, 20) comprise at least a sampling container (15) provided with a relative vacuum pump (18) housing inside it a corresponding sampling bag (16) which, by expanding, aspirates the samples of external air through a respective pipe (17).

3. Sampling equipment (10), according to Claim 2, **characterized in that**, if there is more than one vacuum pump (18), each vacuum pump (18) is independent and adjustable to a different value of flow rate, in order to carry out two or more simultaneous or not simultaneous samplings at different flow rates, thus allowing to obtain the best representation of the odour emission.

4. Sampling equipment (10), according to Claim 2 or to Claim 3, **characterized in that** said vacuum pump (18) is associated with a micrometric valve (19) for adjusting the flow rate of the intake air from the corresponding sampling container (15).

5. Sampling equipment (10), according to Claim 3 or to Claim 4, **characterized in that** each sampling bag (16) is provided with a corresponding non-return valve (20).

6. Sampling equipment (10), according to anyone of the preceding Claims, **characterized in that** said casing (11) further contains heating means (22).

7. Sampling equipment (10), according to anyone of the preceding Claims, **characterized in that** it further comprises a weather station for recording the parameters of temperature and moisture inside said casing (11), external environmental temperature, wind direction and speed and other possible parameters.

8. Sampling equipment (10), according to anyone of preceding Claims, **characterized in that** said conditioning device (13) has a side exhaust port (14).

## Patentansprüche

1. Probenahmeeinrichtung (10) für Geruchsemissionen, die aufweist:
- eine Aufnahme- und Aufbewahrungsvorrichtung (15, 16, 17, 18, 19, 20) für Luftproben, welche die Geruchsemissionen enthalten; und
- eine Fernaktivierungsvorrichtung (21) und/oder Sensoren für die Aktivierung der Aufnahme- und Aufbewahrungsvorrichtung (15, 16, 17, 18, 19, 20);
und **dadurch gekennzeichnet, dass** sie ferner ein Gehäuse (11) aufweist, das durch eine Klimatisierungsvorrichtung (13) thermoreguliert wird, sowie ein Thermostat (23), das mit einer Heizvorrichtung (22) versehen ist und mindestens einen Abschnitt der Aufnahme- und Aufbewahrungsvorrichtung (15, 16, 17, 18, 19, 20) aufnimmt.

2. Probenahmeeinrichtung (10) nach Anspruch 1, **dadurch gekennzeichnet, dass** die Aufnahme- und Aufbewahrungsvorrichtung (15, 16, 17, 18, 19, 20) mindestens einen Probenahmebehälter (15) aufweist, der mit einer relativen Vakuumpumpe (18) versehen ist, die darin einen entsprechenden Probenahmebeutel (16) aufnimmt, der durch Ausdehnung die Proben von der Außenluft durch ein entsprechendes Rohr (17) ansaugt.

3. Probenahmeeinrichtung (10) nach Anspruch 2, **dadurch gekennzeichnet, dass**, wenn mehr als eine Vakuumpumpe (18) vorliegt, jede Vakuumpumpe (18) unabhängig ist und an einen anderen Durchflussratenwert anpassbar ist, um zwei oder mehr gleichzeitige oder nicht gleichzeitige Probenahmen bei unterschiedlichen Durchflussraten durchzuführen, wodurch ermöglicht wird, die beste Darstellung der Geruchsemission zu erreichen.

4. Probenahmeeinrichtung (10) nach Anspruch 2 oder Anspruch 3, **dadurch gekennzeichnet, dass** die Vakuumpumpe (18) mit einem mikrometrischen Ventil (19) verbunden ist, um die Durchflussrate der Ansaugluft aus dem entsprechenden Probenahmebehälter (15) einzustellen.

5. Probenahmeeinrichtung (10) nach Anspruch 3 oder Anspruch 4, **dadurch gekennzeichnet, dass** jeder Probenahmebeutel (16) mit einem entsprechenden Rückschlagventil (20) versehen ist.

6. Probenahmeeinrichtung (10) nach einem der vorstehenden Ansprüche, **dadurch gekennzeichnet, dass** das Gehäuse (11) ferner eine Heizvorrichtung (22) aufweist.

7. Probenahmeeinrichtung (10) nach einem der vorstehenden Ansprüche, **dadurch gekennzeichnet, dass** sie ferner eine Wetterstation aufweist, um die Parameter Temperatur und Feuchtigkeit im Gehäuse (11), äußere Umgebungstemperatur, Windrichtung und -geschwindigkeit und andere mögliche Parameter aufzuzeichnen.

8. Probenahmeeinrichtung (10) nach einem der vorstehenden Ansprüche, **dadurch gekennzeichnet, dass** die Klimatisierungsvorrichtung (13) einen seitlichen Auslassport (14) aufweist.

## Revendications

1. Appareil d'échantillonnage (10) d'émissions d'odeurs, comprenant :
- des moyens de prélèvement et de stockage (15, 16, 17, 18, 19, 20) d'échantillons d'air contenant les émissions d'odeurs ; et
- des moyens d'activation à distance (21) et/ou des capteurs pour l'activation desdits moyens de prélèvement et de stockage (15, 16, 17, 18, 19, 20) ;
et étant **caractérisé en ce qu'**il comprend en outre un boîtier (11), qui est thermorégulé au moyen d'un dispositif de conditionnement (13) et d'un thermostat (23) pourvu d'un élément chauffant (22) et loge au moins une partie desdits moyens de prélèvement et de stockage (15, 16, 17, 18, 19, 20).

2. Appareil d'échantillonnage (10) selon la revendication 1, **caractérisé en ce que** lesdits moyens de prélèvement et de stockage (15, 16, 17, 18, 19, 20) comprennent au moins un récipient d'échantillonnage (15) pourvu d'une pompe à vide relatif (18) logeant à l'intérieur de celui-ci un sac d'échantillonnage (16) correspondant qui, par expansion, aspire les échantillons d'air extérieur à travers un tuyau (17) respectif.

3. Appareil d'échantillonnage (10) selon la revendication 2, **caractérisé en ce que**, s'il y a plus d'une pompe à vide (18), chaque pompe à vide (18) est indépendante et réglable à une valeur de débit différente, afin d'effectuer deux ou plusieurs échantillonnages simultanés ou non simultanés à des débits différents, permettant ainsi d'obtenir la meilleure représentation de l'émission d'odeur.

4. Appareil d'échantillonnage (10) selon la revendication 2 ou la revendication 3, **caractérisé en ce que** ladite pompe à vide (18) est associée à une vanne micrométrique (19) pour régler le débit d'air entrant provenant du récipient d'échantillonnage (15) correspondant.

5. Appareil d'échantillonnage (10) selon la revendication 3 ou la revendication 4, **caractérisé en ce que** chaque sac d'échantillonnage (16) est pourvu d'un clapet anti-retour (20) correspondant.

6. Appareil d'échantillonnage (10) selon l'une quelconque des revendications précédentes, **caractérisé en ce que** ledit boîtier (11) contient en outre un moyen de chauffage (22).

7. Appareil d'échantillonnage (10) selon l'une quelconque des revendications précédentes, **caractérisé en ce qu'**il comprend en outre une station météorologique pour enregistrer les paramètres de température et d'humidité à l'intérieur dudit boîtier (11), la température ambiante externe, la direction et la vitesse du vent et d'autres paramètres possibles.

8. Appareil d'échantillonnage (10) selon l'une quelconque des revendications précédentes, **caractérisé en ce que** ledit dispositif de conditionnement (13) présente un orifice d'évacuation latéral (14).
